# EUROPEAN PATENT APPLICATION

(11) **EP 4 814 664 A1**
(43) Date of publication of application: **30.09.2026**
(21) Application number: 25305454.8
(22) Date of filing: 28.03.2025
(51) Int. Cl.: G06F 3/01

(54) **HAPTIC TRACING: SPATIAL HAPTICS USING GRAPH-BASED SYSTEM**

(71) Applicant: InterDigital CE Patent Holdings, SAS, 75017 Paris (FR); INRIA - Institut National de Recherche en Informatique et en Automatique, 78150 Le Chesnay (FR)
(72) Inventor: LECUYER, Gurvan, 35000 RENNES (FR); GALVANE, Quentin, 35235 THORIGNE-FOUILLARD (FR); GUILLOTEL, Philippe, 35770 VERN SUR SEICHE (FR); GLEMAREC, Yann, 35000 RENNES (FR); ROY, Tom, 35510 CESSON-SÉVIGNÉ (FR); ARGELAGUET SANZ, Ferran, 35520 LA CHAPELLE DES FOUGERETZ (FR)
(74) Representative: Vossius & Partner Patentanwälte Rechtsanwälte mbB

(57) **Abstract**

Some embodiments of a method may include: receiving a bitstream associated with a haptic signal; decoding the bitstream, wherein the decoded bitstream comprises properties used to support haptic spatialization and further comprises a list of haptic mediums at a file level, a list of haptic sources at the file level, and a list of haptic listeners at the file level; and generating the haptic signal using the decoded bitstream.

## Description

### INCORPORATION BY REFERENCE

The present application incorporates by reference in their entirety the following applications: European Patent Application Serial No. EP24306800, entitled "NOISE BAND FOR MPEG HAPTIC FORMAT" and filed October 25, 2024 ("'800 application"); European Patent Application Serial No. EP24306799, entitled "DEFINING HAPTIC DATA USING PROBABILISTIC SPACE" and filed October 25, 2024 ("'799 application"); and European Patent Application Serial No. EP24315179, entitled "MPEG HAPTIC MATERIAL OPTIMIZATION IN A SCENE DESCRIPTION FRAMEWORK" and filed April 16, 2024 ("'179 application").

### BACKGROUND

The present application is related to haptics.

### SUMMARY

An example method in accordance with some embodiments may include: receiving a bitstream associated with a haptic signal; decoding the bitstream, wherein the decoded bitstream includes properties used to support haptic spatialization and further includes a list of haptic mediums at a file level, a list of haptic sources at the file level, and a list of haptic listeners at the file level; and generating the haptic signal using the decoded bitstream.

For some embodiments of the example method, the list of haptic mediums includes medium property information for at least one of: haptic modalities supporting propagation of the haptic signal, thermal conductivity, vibrotactile mediation, and one or more propagation functions.

For some embodiments of the example method, at least one of the one or more propagation functions includes information indicating a haptic modality.

For some embodiments of the example method, at least one of the one or more propagation functions includes information indicating a Uniform Resource Name (URN) associated with the respective propagation function.

For some embodiments of the example method, at least one of the one or more propagation functions includes information indicating a custom function.

For some embodiments of the example method, the list of haptic mediums includes information indicating supported haptic modalities, and at least one of the supported haptic modalities is from a group consisting of: pressure, acceleration, velocity, position, temperature, vibration, water, wind, force, and electrotactile.

For some embodiments of the example method, the list of haptic sources includes information indicating at least one haptic media associated with the respective haptic source.

For some embodiments of the example method, the list of haptic listeners includes information indicating at least one haptic modality supported by the respective haptic listener.

For some embodiments of the example method, the decoded bitstream further includes information linking one or more nodes to at least one element of at least one list of the list of haptic mediums, the list of haptic sources, and the list of haptic listeners.

For some embodiments of the example method, the decoded bitstream further includes a list of haptic mediums at a node level, a list of haptic sources at the node level, and a list of haptic listeners at the node level.

For some embodiments of the example method, the node level includes information indicating one or more links to one or more objects of an immersive environment.

For some embodiments of the example method, the decoded bitstream further includes information linking one or more objects of an immersive scene to at least one element of at least one list of the list of haptic mediums, the list of haptic sources, and the list of haptic listeners.

For some embodiments of the example method, the file level is a gITF file level.

For some embodiments of the example method, the decoded bitstream complies with an MPEG-based standard.

An example apparatus in accordance with some embodiments may include: a processor; and a memory storing instructions operative, when executed by the processor, to cause the apparatus to perform any one of the methods listed above.

### BRIEF DESCRIPTION OF THE DRAWINGS

The following detailed description will be better understood when read in conjunction with the appended drawings, in which there are shown examples of one or more of the multiple embodiments of the present application. It should be understood, however, that the embodiments described herein are not limited to the precise arrangements and instrumentalities shown in the drawings. In the drawings:
FIG. 1 is a system diagram illustrating an example set of interfaces for a system according to some embodiments.
FIG. 2 is a schematic illustration showing an example data structure associated with the MPEG_spatial_haptic extension according to some embodiments.
FIG. 3A is a schematic illustration showing a first example 3D scene according to some embodiments.
FIG. 3B is a schematic illustration showing a first example haptic graph according to some embodiments.
FIG. 4A is a schematic illustration showing a second example 3D scene according to some embodiments.
FIG. 4B is a schematic illustration showing a second example haptic graph according to some embodiments.
FIG. 5A is a schematic illustration showing a first example signal propagation according to some embodiments.
FIG. 5B is a schematic illustration showing a second example signal propagation according to some embodiments.
FIG. 6A is a schematic illustration showing a third example 3D scene according to some embodiments.
FIG. 6B is a schematic illustration showing a third example haptic graph according to some embodiments.
FIGs. 7A-7E are schematic illustrations showing example signal propagations according to some embodiments.
FIG. 8 is a flowchart illustrating an example decoding process according to some embodiments.
FIG. 9 is a flowchart illustrating an example encoding process according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

### DETAILED DESCRIPTION

In describing the various embodiments of the present application, certain terminology is used herein for convenience only and should not be considered as limiting such embodiments. In the drawings, the same reference numerals are employed for designating the same elements throughout the several figures and the present description.

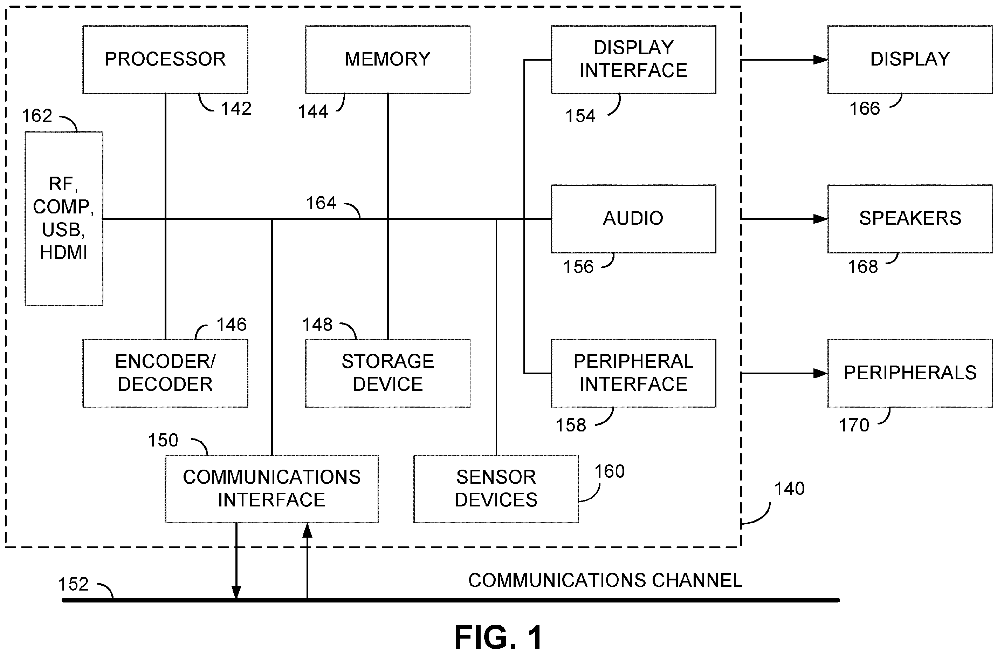

FIG. 1 is a system diagram illustrating an example set of interfaces for a system according to some embodiments. An extended reality display device, together with its control electronics, may be implemented using a system such as the system of FIG. 1. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

A User Equipment (UE) may correspond to any eXtended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

Haptics refers to the sense of touch and includes two dimensions, tactile and kinesthetic. Tactile sensations, such as friction, roughness, hardness, and temperature, are felt through the mechanoreceptors of the skin (Merkel cell, Ruffini ending, Meissner corpuscle, and Pacinian corpuscle) and through thermoreceptors. Kinesthetic sensations are linked to the sensations of force/torque, position, and motion/velocity provided by the muscles, tendons, and the mechanoreceptors in the joints.

Haptics may be experienced, for instance, in a movie theater with a 4DX movie. Haptics use an additional track played along with video and audio to augment movie experiences. Haptics are also commonly used in an interactive experience, such as video games or a virtual reality (VR) experience, to enhance the feeling of immersion. Providing haptic feedback when interacting with virtual objects provides a natural feeling that adds a new layer of realism to the experience.

For interactive experiences in virtual environments, the use of a haptic is becoming more and more popular but the integration of this new media remains limited. Most videogames and VR experiences are created using game engines, such as Unity or Unreal Engine. Over the past several years, those game engines have made tremendous progress on various aspects (such as image quality, sound, and scene complexity) but they only provide very basic support for haptics. For example, only the most common game controller may be supported natively by the mainstream game engine, providing haptic capabilities limited to vibration in the hand.

Haptics are gaining growing popularity with the release of numerous mass market haptic devices. This broadening range of consumer haptic devices comes with the need for better integration of haptic capabilities in game engines to better support the creation of immersive content. A big challenge for leveraging haptic capabilities is the level of support of haptic spatialization in applications.

To address this, the ongoing standardization process on haptics started to focus on spatialization. An MPEG submission, *Update to the TuC for ISO*/*IEC 23090-31 MPEG Haptics Coding,* N01142, WG07, MPEG 149 (Jan. 2025), introduced concepts of haptic sources, haptic listeners and haptic mediums, along with a proposed implementation based on extensions to the gITF standard.

A haptic medium is a virtual object with haptic properties. A haptic medium is associated with a node of the scene and its associated geometry. The same node may also be associated with haptic sources and haptic listeners. The main objective of a haptic medium is to modulate and transfer haptic information based on its haptic properties (physical properties). A haptic medium may define a list of supported modalities, the physical properties of the material, and propagation functions for different haptic modalities.

A haptic source is an element of the virtual scene that emits a haptic signal. A haptic source is associated with a node of the scene and may be linked to the geometry associated with the node. The haptic data of a source is defined by a list of haptic medias. A haptic media may define haptic data for a vibration signal, a temperature, a movement, or any other haptic modality. A haptic media is defined with a reference to a buffer associated with a media file containing the haptic data (such as, an HJIF file or an HMPG file). The media also may specify information on how and when to play the haptic data. A haptic media may have different states. A haptic media may or may not be activated. If the haptic effect is activated and playing, the haptic source emits the associated haptic signal that may then be propagated through haptic mediums.

A haptic listener is an element of the scene that captures haptic information received from haptic sources. A haptic listener is typically associated with a haptic device in the real world. A haptic listener may be used to capture all the haptic data, but a haptic listener also may be restricted to specific haptic modalities.

Implementations may be based on an extension to the gITF standard MPEG_spatial_haptic. This extension is defined at the gITF file level and at the node level.

As detailed in Table 1, the MPEG_spatial_haptic extension defines at the gITF file level a list of all haptic mediums, haptic sources, and haptic listeners in the scene. Each element of this extension at the file level may then be referenced at the node level.

**Table 1.**

| **Name** | **Type** | **Default** | **Description** | **Required** |
|---|---|---|---|---|
| hapticMediums | Array<MPEG_spatial_haptics.Medium> | N/A | Provides a list of haptic mediums at the gITF file level to enable spatial haptic support | Yes |
| hapticSources | Array<MPEG_spatial_haptics.Source> | N/A | Provides a list of haptic sources at the gITF file level to enable haptic support | Yes |
| hapticListeners | Array<MPEG_spatial_haptics.Listener> | N/A | Provides a list of haptic listeners at the gITF file level to enable haptic support | Yes |

Each element of the hapticMediums array defines a medium with its properties and propagation functions. A medium defines the list of supported modalities as well as properties, such as thermal conductivity or vibrotactileMediation. Table 2 details the semantics of a haptic medium, such as the MPEG_spatial_haptic.medium items of the hapticObjects array from the MPEG_haptic extension.

**Table 2.**

| **Name** | **Type** | **Default** | **Description** | **Required** |
|---|---|---|---|---|
| hapticModalities | array<Enumeration> | N/A | List of haptic modalities that may be propagated through the medium. Possible values are described in Table 4. An empty list means that all modalities may be transmitted. | Yes |
| thermalConductivity | Number | N/A | Thermal conductivity of the medium expressed in W/(m·K). | No |
| vibrotactileMediation | Number | N/A | Vibrotactile properties to be | No |
| propagationFunctions | array<PropagationFunction> | N/A | List of propagation functions to use for the different supported haptic modalities. If no propagation function is specified for a haptic modality, the haptic signal is transmitted without any modification (the propagation function is the identity) | Yes |

The semantics for defining propagation functions are detailed in Table 3. The propagation function may be specified in multiple ways. For some embodiments, Uniform Resource Names (URNs) may be used, in which each URN would uniquely identify a propagation function. For some embodiments, users may define their own custom functions directly with a string.

**Table 3.**

| **Name** | **Type** | **Default Value** | **Description** | **Required** |
|---|---|---|---|---|
| hapticModality | Enumeration | N/A | Haptic modality for which the propagation function is defined. Possible values are described in Table 4. | Yes |
| function | string | urn: haptic-propagation: identity | Function is a URN uniquely identifying what propagation function to use. For each URN, proper formulas shall be provided indicating what are the parameters (distance, time, ...) and how to use the haptic object properties. | No |
| customFunction | string | "S'=S" | Custom function that defines how a haptic signal is modulated based on the specified parameter. | No |

Table 4 shows a list of supported haptic modalities.

**Table 4.**

| **Haptic Modality** |
|---|
| Pressure = 0 |
| Acceleration |
| Velocity |
| Position |
| Temperature |
| Vibrotactile |
| Water |
| Wind |
| Force |
| Electrotactile |

Table 5 details the semantics of a haptic source, such as MPEG_haptics.hapticSource items of a hapticSources array from the MPEG_haptic extension. A source is characterized by a list of haptic medias.

**Table 5.**

| **Name** | **Type** | **Default** | **Description** | **Required** |
|---|---|---|---|---|
| hapticMedias | Array<HapticMedia> | N/A | List of haptic medias associated with a source | Yes |

Table 6 details the semantics of haptic medias, such as MPEG_haptics.hapticSource.hapticMedia items of a hapticEffects array from a haptic source. In the context of MPEG, haptic data associated with a haptic media is stored in a MPEG_media.media array and may be referenced through gITF accessors. Media is also associated with a haptic modality and a state (enable, disabled).

| **Name** | **Type** | **Default** | **Description** | **Required** |
|---|---|---|---|---|
| hapticMedia | Accessor | N/A | Accessor to a media source in MPEG_media.media array containing haptic media files. | Yes |
| hapticModality | Enumeration | N/A | Haptic modality for which the propagation function is defined. Possible values are described in Table 4. | Yes |

**Table 6.**

| **Name** | **Type** | **Default** | **Description** | **Required** |
|---|---|---|---|---|
| mediaState | enumeration | "Disabled" | State of the haptic media. Possible values are: Enabled, Disabled | No |

Table 7 details the properties of haptic listeners, such as MPEG_spatial_haptics.Listener items of a hapticListeners array from the MPEG_spatial_haptic extension.

**Table 7.**

| **Name** | **Type** | **Default** | **Description** | **Required** |
|---|---|---|---|---|
| hapticModality | Array<enumeration> | N/A | List of haptic modalities that may be captured by the listener. Possible values are described in Table 4. An empty list means that all modalities are captured by the listener. | Yes |

With the MPEG_spatial_haptic extension, the haptic data of an object may be directly attached to a node. The extension at the node level references elements defined at the gITF file level. Table 8 details the semantics of the MPEG_haptic and MPEG_spatial_haptic extensions at the node level.

**Table 8.**

| **Name** | **Type** | **Default** | **Description** | **Required** |
|---|---|---|---|---|
| hapticMediums | Array<MPEG_spatial_haptics.NodeMedium> | N/A | Reference to an item in the hapticObject array of the MPEG_haptic extension defined at gITF file level | Yes |
| hapticSources | Array<MPEG_spatial_haptics.NodeSource> | N/A | Reference to an item in the hapticSource array of the MPEG_haptic extension defined at gITF file level | Yes |
| hapticListeners | Array<MPEG_spatial_haptics.NodeListener> | N/A | Reference to an item in the hapticListener array of the MPEG_haptic extension defined at gITF file level | Yes |

Table 9 details the semantics of the NodeMedium elements of the hapticMediums elements in the MPEG_spatial_haptics extension at the node level. Table 9 contains an index referencing an element of the hapticMediums array of the extension defined at the gITF file level.

**Table 9.**

| **Name** | **Type** | **Default** | **Description** | **Required** |
|---|---|---|---|---|
| index | Integer | N/A | Reference to an item in the hapticMediums array of the MPEG_spatial_haptic extension defined at gITF file level | Yes |

Table 10 details the semantics of the NodeSource elements of the hapticSources elements in the MPEG_spatial_haptics extension at the node level. Table 10 contains an index referencing an element of the hapticSources array of the extension defined at the gITF file level. A property indicating the precise location and shape of the source also may be defined for some embodiments.

**Table 10.**

| **Name** | **Type** | **Default** | **Description** | **Required** |
|---|---|---|---|---|
| index | Integer | N/A | Reference to an item in the hapticSources array of the MPEG_spatial_haptic extension defined at gITF file level | Yes |
| instanceLocation/shape | TBD | TBD | TBD | TBD |

Table 11 details the semantics of the NodeListener elements of the hapticListeners elements in the MPEG_spatial_haptics extension at the node level. Table 11 contains an index referencing an element of the hapticSources array of the extension defined at the gITF file level. A property indicating the precise location and shape of the source also may be defined for some embodiments.

**Table 11.**

| **Name** | **Type** | **Default** | **Description** | **Required** |
|---|---|---|---|---|
| index | Integer | N/A | Reference to an item in the hapticListeners array of the MPEG_spatial_haptic extension defined at gITF file level | Yes |
| instanceLocation/shape | TBD | TBD | TBD | TBD |

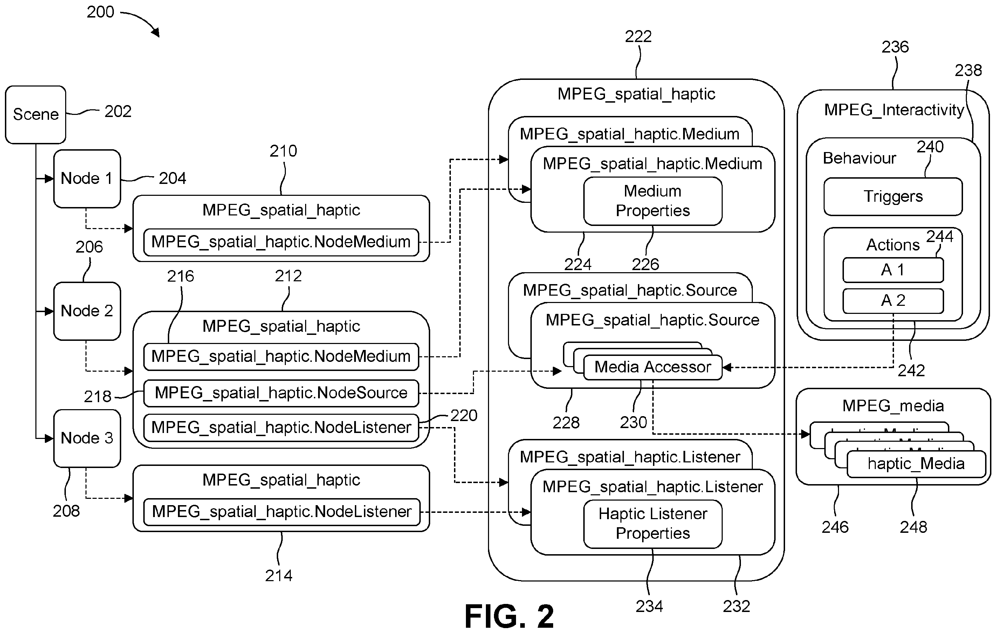

FIG. 2 is a schematic illustration showing an example data structure associated with the MPEG_spatial_haptic extension according to some embodiments. FIG. 2 shows an example gITF scene structure 200 using the MPEG_spatial_haptic extension.

All haptic mediums, haptic sources, and haptic listeners are defined with the MPEG_spatial_haptic extension at the gITF file level. Objects in the scene may be associated with haptic mediums, haptic sources, and/or haptic listeners. Such a methodology allows data storage to be optimized. If an object in a scene is duplicated many times, the haptic data itself is defined once at the top level and is only referenced at the node level.

The example gITF scene structure 200 may have nodes 204, 206, 208 coming off the scene 202. FIG. 2 shows MPEG_spatial_haptic objects 210, 212, 214 connected to the nodes 204, 206, 208. An MPEG_spatial_haptic object 210, 212, 214 may contain haptic medium element(s) (such as an MPEG_spatial_haptic_NodeMedium element 216), haptic source element(s) (such as an MPEG_spatial_haptic_NodeSource element 218), and/or haptic listener element(s) (such as an MPEG_spatial_haptic_NodeListener element 220). An MPEG_spatial_haptic object 222 also may contain MPEG_spatial_haptic.Medium element(s) 224, MPEG_spatial_haptic.Source element(s) 228, and MPEG_spatial_haptic.Listener element(s) 232.

An MPEG_spatial_haptic_NodeMedium element 216 may be linked to an MPEG_spatial_haptic.Medium element 224. An MPEG_spatial_haptic_NodeSource element 218 may be linked to an MPEG_spatial_haptic.Source element 228. An MPEG_spatial_haptic_NodeListener element 220 may be linked to an MPEG_spatial_haptic.Listener element 232.

An MPEG_spatial_haptic.Medium element 224 may contain medium properties 226. An MPEG_spatial_haptic.Source element 228 may contain one or more media accessors 230. An MPEG_spatial_haptic.Listener element 232 may contain haptic listener properties 234.

A media accessor 230 may be linked to action component 244, which may be contained within an Actions container 242. Furthermore, a media accessor 230 may be linked to one or more haptic_media elements 248, which may be contained within an MPEG_media object 246.

An MPEG_interactivity object 236 may contain a Behavior element 238. A Behavior element 238 may contain a Triggers container 240 and an Actions container 242. An Actions container 242 may contain one or more action component 244. An MPEG_media object 246 may contain one or more haptic_media elements 248.

Designing haptic experiences primarily relies on 3D engines, such as Unity or Unreal Engine. These systems are understood to treat haptic devices as input devices, offering limited support for addressing haptic signals. An active system that relies on a physics system or trigger areas placed within the scene may be designed to handle haptic feedback in interactive experiences designed with such 3D engines.

Haptic devices are a growing market, with manufacturers introducing increasingly complex systems. Some haptic devices are designed for specific body parts, such as game controllers, while other haptic devices, like haptic vests, cover more areas. Some devices may provide full-body coverage. Multiple devices may be used concurrently to provide full or partial body coverage. Managing haptic feedback across various body parts uses complex logic, especially when using devices from different manufacturers, each with their own API and behaviors.

Haptic devices may provide feedback using various modalities. The most common ones are vibrotactile and force feedback, but other modalities, such as pressure, electrotactile, and temperature, are also available. There are even more modalities beyond these examples. The system becomes even more complex when handling different modalities in the same scene, since each modality requires dedicated logic for feedback handling, significantly increasing the resources used to support haptic capabilities. The complexity of creating meaningful haptic experiences explains the lack of available content. This aspect serves as a bottleneck for the widespread adoption of haptic devices.

A proposal for haptic spatialization within the ongoing standardization of haptics provides a method to formalize how haptic is defined in a scene. The proposal allows an indication of where haptic sources and haptic listeners are placed in a 3D environment and how a haptic signal should propagate in the environment through different mediums.

However, as understood, the proposal does not define a processing model; the proposal only defines the information necessary for rendering without specifying how the data should be processed. The proposal does not define how different components are linked or how to establish connections between these components. Also, the proposal does not provide details on how haptic data from different sources may be rendered on the same device if they go through the same listener or are propagated at the same time through the same medium.

This application defines a generic system using a graph to handle haptic components of interactive scenes and to compute haptic feedback to be rendered on users. Such systems may allow content creators to design interactive experiences with no need to implement logic to perform haptic rendering. This application relies on an underlying 3D scene description system that provides the haptic data, including information on the haptic listeners, the haptic sources, and the haptic objects through which haptic signals may propagate. The gITF format and the extension defined earlier may be a good candidate for this underlying format. This application uses the scene information provided by the scene description data to build and update a haptic graph in real-time. This dedicated haptic graph may be used to establish connections between different components. This graph includes a set of connected haptic nodes described below.

### Haptic Node

This application defines three types of nodes: source nodes, listener nodes, and contact nodes. Each node is linked to a specific object within the scene.

### Source Node

Source nodes emit haptic signals to (all) connected nodes. A source node may be used to broadcast a continuous signal in the graph. Also, a source node may be used to trigger a punctual haptic effect, such as a collision. A source node may use haptic data stored in any format, such as MPEG Haptics or a WAV file. Haptic data may be created procedurally based on interactions between objects and using the haptic properties of the object / medium.

### Listener Node

Listener nodes capture incoming haptic signals. They may be linked to specific devices or haptic actuators to render haptic feedback. The listener may be set up to capture only one type of haptic modality or several. A listener node may be customized with parameters to fine-tune the rendering process. The parameters may be related to user preferences and may be linked to the haptic devices used or linked directly to the application itself.

### Contact Node

A contact node is associated with a haptic object. Contact nodes are dynamically created when two haptic objects come into contact within the scene and disappear once the contact ceases. These nodes facilitate the propagation of signals between objects involved in the interaction. When contact occurs, a contact node is created for each of the two haptic objects in contact. The two contact nodes are then linked to each other and to the other contact nodes already associated with the haptic objects to which they belong.

A contact node captures the interaction and transmits the signal to connected nodes, modulating the signal based on a predefined propagation function within the node. For example, the propagation function may adjust the signal's intensity or delay based on the distance between objects or the nature of their contact. The propagation function may be defined by the content creator. Each node may have different propagation functions or share the same propagation function.

A node may define an internal propagation function used to propagate a signal to a node referring to the same haptic object. In this case, the propagation function acts as a representation of the haptic properties of the object.

A node may define an external propagation function used to propagate a signal to node referring to other haptic object. In this second case, the propagation function may represent the contact point between the two haptic objects. Such a propagation function may consider the contact surface, the pressure applied between the two objects, the rugosity, the density, and other parameters that may be used to compute the propagation.

### Haptic Graph

A haptic graph component is a data structure that allows the representation of haptic enabled objects of a scene and their connections. An object is considered as a haptic object (or medium) if the object contains haptic properties, such as the definition of a haptic source or a haptic listener, or if the object holds material properties that may convey a haptic signal.

The haptic graph is based on contact points between haptic objects. When two haptic objects come into contact, two contact nodes connected to one another are added to the graph - one for each object. All nodes referring to the same object are interconnected. A haptic object H₁ (with N distinct contact points with other haptic objects) is represented by N interconnected contact nodes referring to H₁. In this example, N other contact nodes are added, referring to the haptic objects that contact H₁.

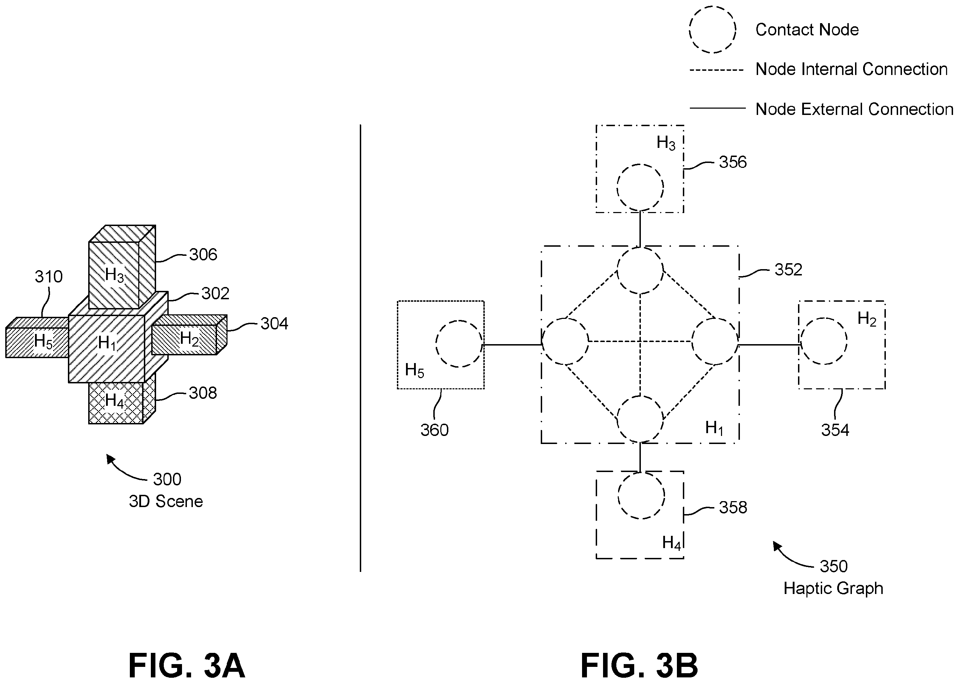

FIG. 3A is a schematic illustration showing a first example 3D scene according to some embodiments. FIG. 3A shows a 3D scene 300 containing 5 haptic objects 302, 304, 306, 308, 310.

FIG. 3B is a schematic illustration showing a first example haptic graph according to some embodiments. FIG. 3B displays a configuration of a haptic graph 350 in which the haptic objects H₂ (354), H₃ (356), H₄ (358), and H₅ (360) are connected to the haptic object H₁ (352). The rectangles symbolize the haptic object of the scene but are not part of the graph. The nodes in a rectangle refer to the corresponding object. The four contact nodes (H₂, H₃, H₄, and H₅) referring to the haptic object (H₁) are fully connected.

### Signal Propagation

The graph-based system facilitates a signal propagation mechanism for controlling haptics in an interactive 3D experience. When a source node emits a signal (which may be triggered by events, such as a detection collision or a timed event), the signal propagates to each connected node. Each node contains a propagation function that filters the signal. This function may be modulated based on the type of contact between haptic objects in the scene and/or the haptic properties attached to the objects.

This application uses two types of propagation: internal and external. Internal propagation occurs when a haptic signal is transmitted between two contact nodes of the same haptic object. In this case, the propagation function may rely on material properties, such as density or conductivity. The function also may be modulated based on the distance between the nodes. External propagation happens when a haptic signal is transmitted between nodes of different haptic objects. External propagation may depend on the contact surface area, surface properties (like roughness), or other parameters (such as the force applied at the contact zone).

The definition of these two types of propagation allows for more freedom in the creation process. However, nothing prevents using the same propagation function for both cases. The propagation function, whether internal or external, may be customized by the content creator designing the experience. A propagation function may be seen as a filter applied to the haptic signal. The signal may be modulated in amplitude, which generally refers to the intensity of the haptic feedback. The haptic signal also may be modulated in time, inducing delays in the propagation or stretching the signal, for example. Additionally, the signal may be processed based on different frequency bands, allowing for more nuanced control of the haptic feedback.

### Haptic Tracing

This application introduces the concept of haptic tracing, drawing an analogy to ray tracing, which is a method used for rendering 3D images. Ray tracing computes the paths of light rays as they travel towards a virtual camera. Haptic tracing involves calculating the paths of haptic signals as they propagate through a virtual environment. While light only propagates through air, haptic signals also propagate through matter. Furthermore, haptic signals are impacted by the different medium encountered.

Using the graph-based system described in the previous section, a haptic tracing algorithm may be transformed into a path finding method. For a path finding method, each listener node is a start point, and all source nodes act as end points.

For each listener node in the scene, the haptic feedback may be rendered by combining the haptic signal coming from every source in the graph and through every possible path. To ensure that the system is not too computationally expensive, some strategies may be set in place to avoid an infinite loop or to limit the number of visited nodes, similar to limiting the number of bounces in ray tracing. Several paths may be used to render the haptic signal. Then, the application may mix the different signals before rendering the haptic feedback.

### Examples

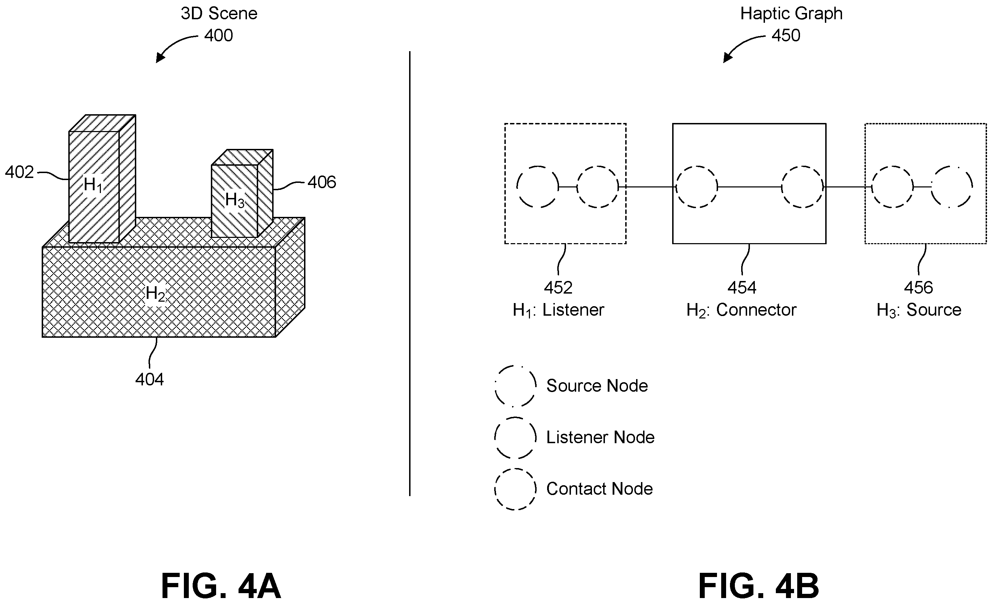

FIG. 4A is a schematic illustration showing a second example 3D scene according to some embodiments. FIG. 4A shows a 3D scene 400 containing three haptic objects 402, 404, 406. Object H₁ (402) is a haptic listener. Object H₂ (404) is a connector with haptic properties. Object H₃ (406) is a haptic source.

FIG. 4B is a schematic illustration showing a second example haptic graph according to some embodiments. FIG. 4B shows a corresponding haptic graph 450. In FIG. 4B, the rectangles are drawn for illustration purposes. Each rectangle represents an object but is not part of the haptic graph. The listener object 452 has 2 nodes: a listener node and a contact node corresponding to the contact point with the connector object 454. The two nodes are connected since they are part of the same object. The connector object 454 contains two contact nodes: one for the contact point with the listener object 452 and one for the contact point with the haptic source object 456. The haptic source object 456 has two nodes: a source node and a contact node corresponding to the contact point with the connector object 454.

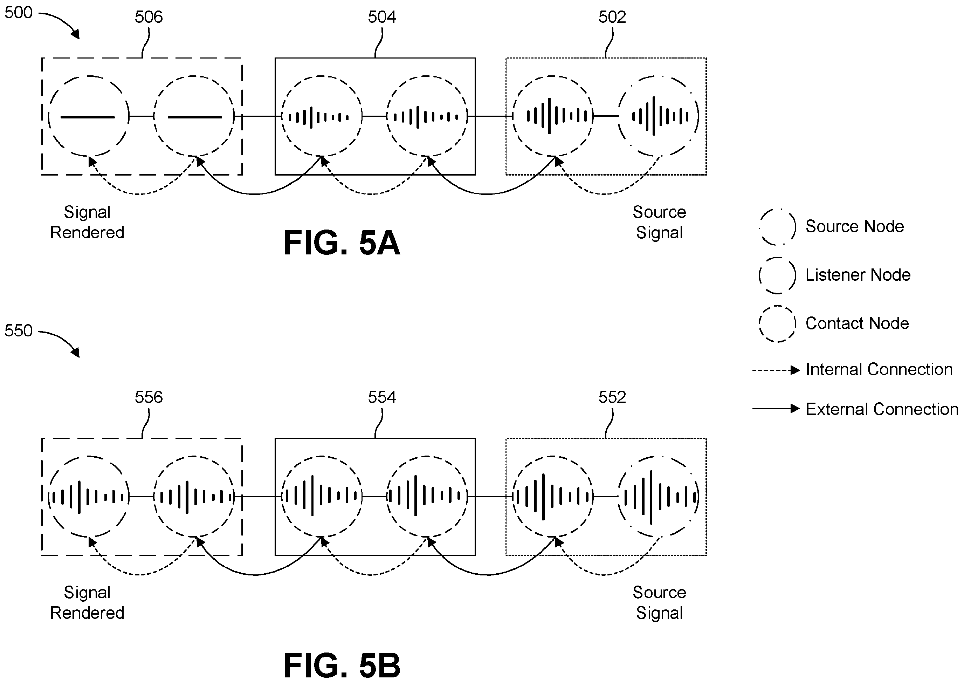

FIG. 5A is a schematic illustration showing a first example signal propagation according to some embodiments. FIG. 5B is a schematic illustration showing a second example signal propagation according to some embodiments. The example signal propagations in FIGs. 5A and 5B are based on the scene graph of FIGs. 4A and 4B.

In the haptic graph 500 of FIG. 5A, a source object 502, a connector object 504, and a listener object 506 are connected in series. In FIG. 5A, no signal reaches the listener node. The propagation functions of the consecutive nodes attenuated the signal until the signal dissipated completely. In this first example, the internal propagation functions attenuate the original signal using a linear function with a coefficient of 0.9. The external propagation function applies a linear attenuation with a coefficient of 0.6 and incorporates time stretching.

In the haptic graph 550 of FIG. 5B, a source object 552, a connector object 554, and a listener object 556 are connected in series. In FIG. 5B, the propagation functions applied are also linear attenuation but with a coefficient closer to 1, which allows for more signal to pass through the node. In this second example, the listener node 456 captures the original signal modulated by the successive nodes of the graph. The modulated signal may be rendered on an attached haptic device or haptic actuator.

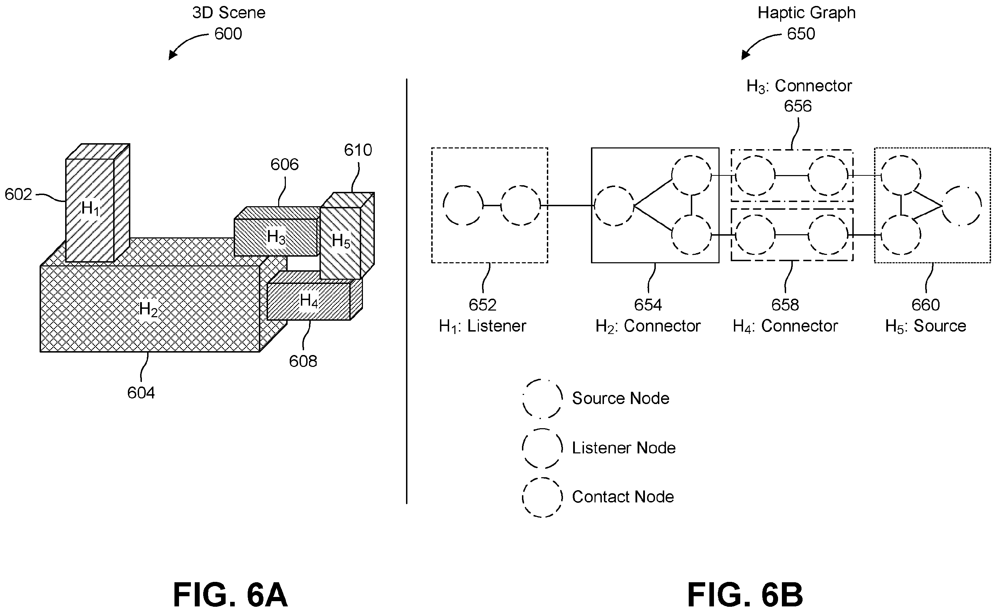

FIG. 6A is a schematic illustration showing a third example 3D scene according to some embodiments. FIG. 6B is a schematic illustration showing a third example haptic graph according to some embodiments. FIGs. 6A and 6B provide another example with a more complex setup than FIGs. 5A and 5B. The source object H₅ (610, 660) is in contact with two haptic objects H₃ (606, 656) and H₄ (608, 658). Both objects are connected to a fourth haptic object H₂ (604, 654), which is connected to a listener H₁ (602, 652). The haptic graph in FIG. 6B shows the interconnected nodes in H₂ (654) and H₅ (660).

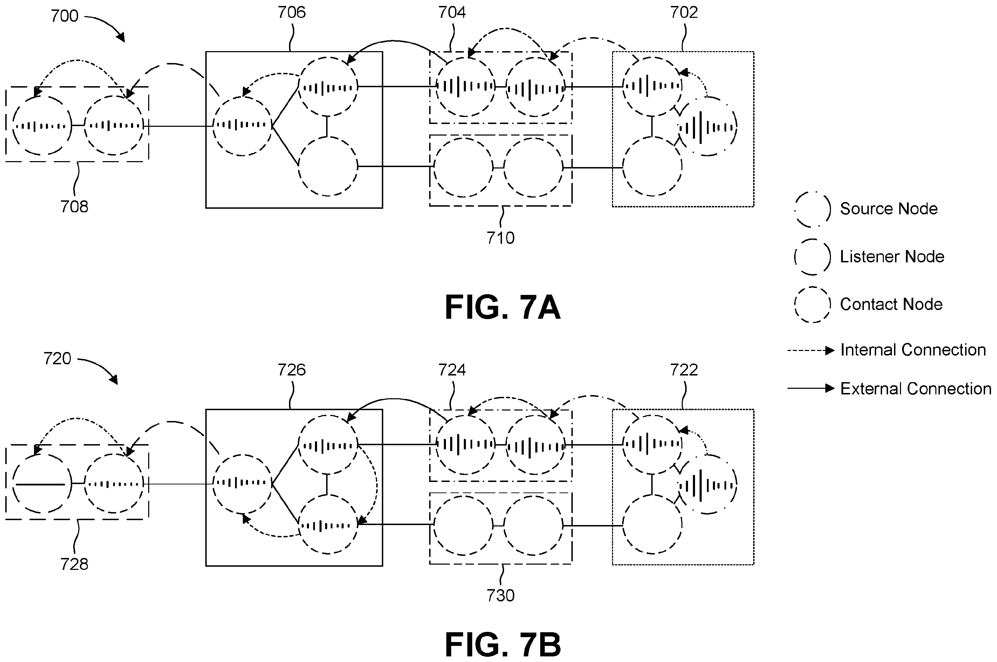

FIGs. 7A-7E are schematic illustrations showing example signal propagations according to some embodiments. FIGs. 7A-7E show example propagations 700, 720, 740, 760, 780 of a haptic signal from a source node to a listener node. Each line hop in FIGs. 7A-7E show a possible path for a signal.

FIG. 7A shows a signal that goes from the source node of source object 702 to connector object 704 to the top right contact node of connector object 706 to the listener node of listener object 708. The signal does not go through connector object 710. In this example propagation 700, the listener captures a haptic signal.

FIG. 7B shows a signal that goes from the source node of source object 722 to connector object 724 to the top right contact node of connector object 726. Part of the signal goes to the bottom right contact node of connector object 726, which is not the most direct path toward the listener. The signals join back together in the left contact node of connector object 726. The joined signal then goes to the listener node of listener object 728. The signal does not go through connector object 730. In this example propagation 720, the listener does not capture a haptic signal.

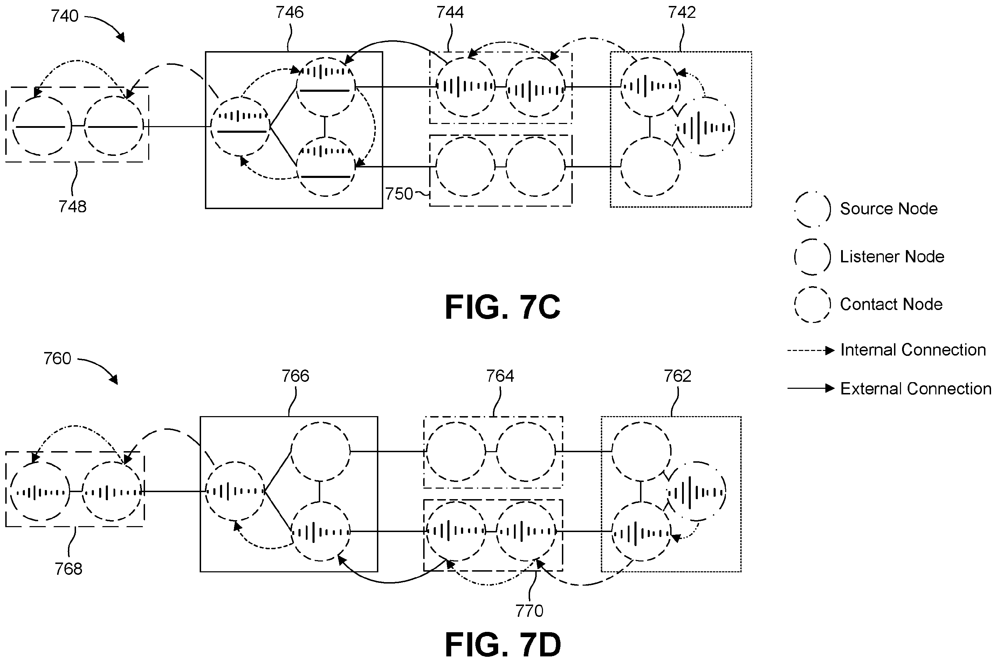

FIG. 7C shows a signal that goes from the source node of source object 742 to connector object 744 to the top right contact node of connector object 746. The signal then goes to the bottom right contact node of connector object 746. The signal then goes to the left contact node of connector object 746. The signal continues going in a circle within connector object 746 and does not go to the listener node of listener object 748. The signal also does not go through connector object 750. In this example propagation 740, the listener does not capture a haptic signal.

FIG. 7D shows a signal that goes from the source node of source object 762 to connector object 770 to the bottom right contact node of connector object 766 to the listener node of listener object 768. The signal does not go through connector object 764. In this example propagation 760, the listener captures a haptic signal.

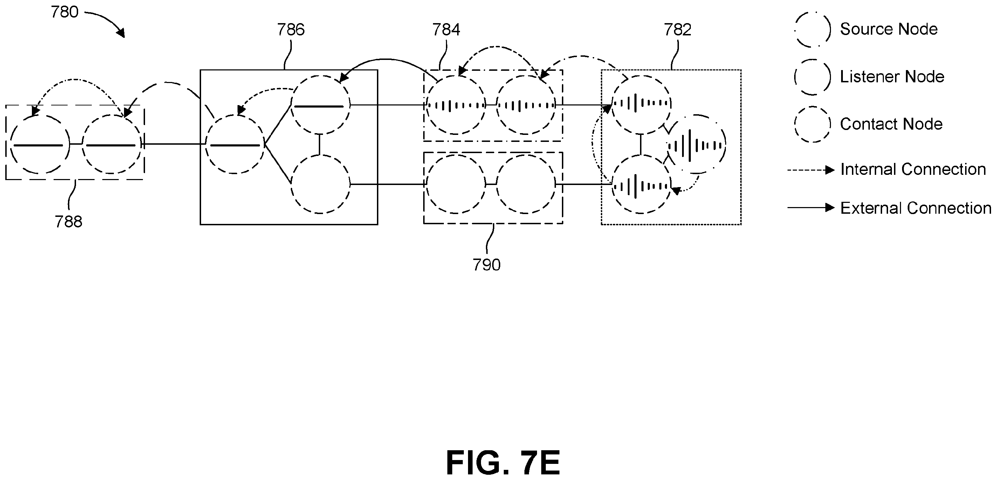

FIG. 7E shows a signal that goes from the source node of source object 782 to the bottom left node of source object 782. The signal then goes to the top left node of source object 782. The signal then goes to connector object 784. The signal attenuates to zero before the signal reaches connector object 786 or listener object 788. The signal also does not go through connector object 790. In this example propagation 780, the listener does not capture a haptic signal because the signal used an indirect path before following a direct path to the listener.

In each node of this haptic object, the haptic signal is represented on two lines. For some embodiments, the first row represents the haptic signal during the first visit of the node, and the second row represents the haptic signal during the second visit of the node.

The examples provided in FIGs. 7A-7E do not provide an exhaustive list of all possible paths. Since the graph is not oriented and there is a loop present in the graph, there are an infinite number of possible paths.

In the examples of FIGs. 7A-7E, a rule is imposed. This rule states that, for each path, the haptic signal cannot move backward. This rule means that if the signal in node 1 is coming from node 0, the signal cannot travel back to node 0 at the next step. Other rules of propagation may be used to limit the number of valid paths and avoid infinite looping.

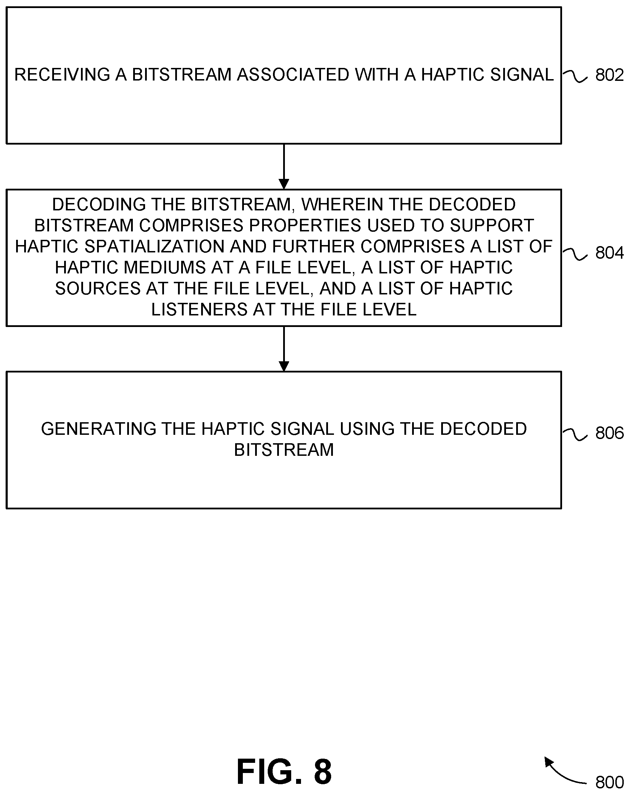

FIG. 8 is a flowchart illustrating an example decoding process according to some embodiments. For some embodiments, an example process 800 may include receiving 802 a bitstream associated with a haptic signal. For some embodiments, the example process 800 may further include decoding 804 the bitstream, wherein the decoded bitstream comprises properties used to support haptic spatialization and further comprises a list of haptic mediums at a file level, a list of haptic sources at the file level, and a list of haptic listeners at the file level. For some embodiments, the example process 800 may further include generating 806 the haptic signal using the decoded bitstream.

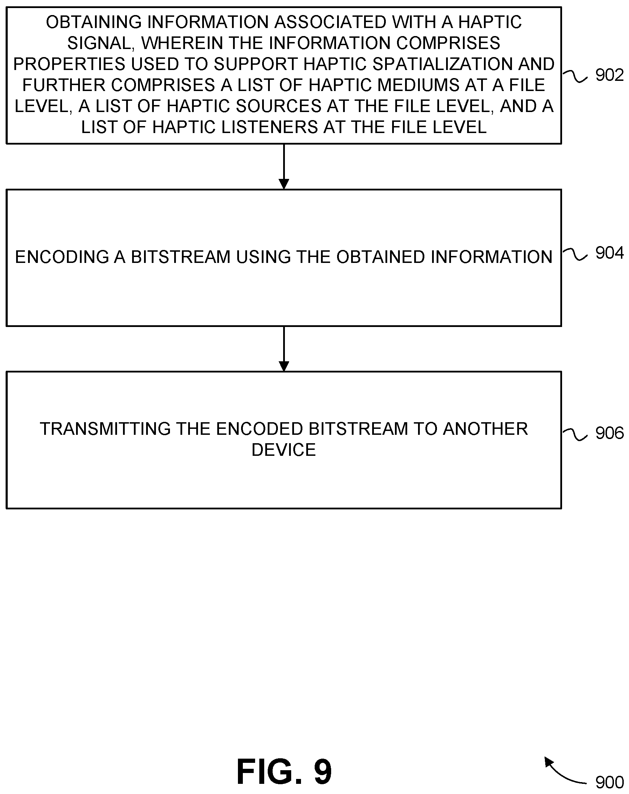

FIG. 9 is a flowchart illustrating an example encoding process according to some embodiments. For some embodiments, an example process 900 may include obtaining 902 information associated with a haptic signal, wherein the information comprises properties used to support haptic spatialization and further comprises a list of haptic mediums at a file level, a list of haptic sources at the file level, and a list of haptic listeners at the file level. For some embodiments, the example process 900 may further include encoding 904 a bitstream using the obtained information. For some embodiments, the example process 900 may further include transmitting 906 the encoded bitstream to another device.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: receiving a bitstream associated with a haptic signal; decoding the bitstream, wherein the decoded bitstream includes properties used to support haptic spatialization and further includes a list of haptic mediums at a file level, a list of haptic sources at the file level, and a list of haptic listeners at the file level; and generating the haptic signal using the decoded bitstream.

For some embodiments of the example method, the list of haptic mediums includes medium property information for at least one of: haptic modalities supporting propagation of the haptic signal, thermal conductivity, vibrotactile mediation, and one or more propagation functions.

For some embodiments of the example method, at least one of the one or more propagation functions includes information indicating a haptic modality.

For some embodiments of the example method, at least one of the one or more propagation functions includes information indicating a Uniform Resource Name (URN) associated with the respective propagation function.

For some embodiments of the example method, at least one of the one or more propagation functions includes information indicating a custom function.

For some embodiments of the example method, the list of haptic mediums includes information indicating supported haptic modalities, and at least one of the supported haptic modalities is from a group consisting of: pressure, acceleration, velocity, position, temperature, vibration, water, wind, force, and electrotactile.

For some embodiments of the example method, the list of haptic sources includes information indicating at least one haptic media associated with the respective haptic source.

For some embodiments of the example method, the list of haptic listeners includes information indicating at least one haptic modality supported by the respective haptic listener.

For some embodiments of the example method, the decoded bitstream further includes information linking one or more nodes to at least one element of at least one list of the list of haptic mediums, the list of haptic sources, and the list of haptic listeners.

For some embodiments of the example method, the decoded bitstream further includes a list of haptic mediums at a node level, a list of haptic sources at the node level, and a list of haptic listeners at the node level.

For some embodiments of the example method, the node level includes information indicating one or more links to one or more objects of an immersive environment.

For some embodiments of the example method, the decoded bitstream further includes information linking one or more objects of an immersive scene to at least one element of at least one list of the list of haptic mediums, the list of haptic sources, and the list of haptic listeners.

For some embodiments of the example method, the file level is a gITF file level.

For some embodiments of the example method, the decoded bitstream complies with an MPEG-based standard.

An example apparatus in accordance with some embodiments may include: a processor; and a memory storing instructions operative, when executed by the processor, to cause the apparatus to perform any one of the methods listed above.

One or more embodiments provide a computer program including instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods include one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present application may refer to "determining" various pieces of information. Determining information may include one or more of, for example, estimating, calculating, predicting, or retrieving (e.g., from memory) the information.

The present application may refer to "accessing" various pieces of information. Accessing information may include one or more of, for example, receiving, retrieving (e.g., from memory), storing, moving, copying, calculating, determining, predicting, or estimating the information. Similarly, the present application may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present application or the following claims. Although features and elements are described herein in particular combinations, those of ordinary skill in the art will appreciate that such features or elements may be used alone or in any combination with the other features and elements. It is understood, therefore, that the overall teachings of the present application are not limited to the particular embodiments, implementations, and examples disclosed herein, but are intended to cover variations, modifications, and alternatives as defined by the appended claims and any and all equivalents thereof.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

Various numeric values may be used in the present application, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
receiving a bitstream associated with a haptic signal;
decoding the bitstream,
wherein the decoded bitstream comprises properties used to support haptic spatialization and further comprises a list of haptic mediums at a file level, a list of haptic sources at the file level, and a list of haptic listeners at the file level; and
generating the haptic signal using the decoded bitstream.

2. The method of claim 1, wherein the list of haptic mediums comprises medium property information for at least one of: haptic modalities supporting propagation of the haptic signal, thermal conductivity, vibrotactile mediation, and one or more propagation functions.

3. The method of claim 2, wherein at least one of the one or more propagation functions comprises information indicating a haptic modality.

4. The method of claim 2, wherein at least one of the one or more propagation functions comprises information indicating a Uniform Resource Name (URN) associated with the respective propagation function.

5. The method of claim 2, wherein at least one of the one or more propagation functions comprises information indicating a custom function.

6. The method of any one of claims 1-5,
wherein the list of haptic mediums comprises information indicating supported haptic modalities, and
wherein at least one of the supported haptic modalities is from a group consisting of: pressure, acceleration, velocity, position, temperature, vibration, water, wind, force, and electrotactile.

7. The method of any one of claims 1-6, wherein the list of haptic sources comprises information indicating at least one haptic media associated with the respective haptic source.

8. The method of any one of claims 1-7, wherein the list of haptic listeners comprises information indicating at least one haptic modality supported by the respective haptic listener.

9. The method of any one of claims 1-8, wherein the decoded bitstream further comprises information linking one or more nodes to at least one element of at least one list of the list of haptic mediums, the list of haptic sources, and the list of haptic listeners.

10. The method of any one of claims 1-9, wherein the decoded bitstream further comprises a list of haptic mediums at a node level, a list of haptic sources at the node level, and a list of haptic listeners at the node level.

11. The method of claim 10, wherein the node level comprises information indicating one or more links to one or more objects of an immersive environment.

12. The method of any one of claims 1-11, wherein the decoded bitstream further comprises information linking one or more objects of an immersive scene to at least one element of at least one list of the list of haptic mediums, the list of haptic sources, and the list of haptic listeners.

13. The method of any one of claims 1-12, wherein the file level is a gITF file level.

14. The method of any one of claims 1-13, wherein the decoded bitstream complies with an MPEG-based standard.

15. An apparatus comprising:
a processor; and
a memory storing instructions operative, when executed by the processor, to cause the apparatus to perform the method of any one of claims 1 through 14.
